# DEMANDE DE BREVET EUROPEEN

(11) **EP 1 538 542 A1**
(43) Date de publication de la demande: **08.06.2005**
(21) Numéro de dépôt: 03293019.0
(22) Date de dépôt: 02.12.2003
(51) Int. Cl.: G06F 17/60

(54) **Système et procédé de traitement d'une requête en information de prix**

(71) Demandeur: Amadeus S.A.S., 06410 Biot (FR)
(72) Inventeur: Isnardon, Bénédicte Cabinet Hautier, 06000 Nice (FR); Blaszka, Thierry Cabinet Hautier, 06000 Nice (FR); Hoff, Frédéric Cabinet Hautier, 06000 Nice (FR); Perekhvatova, Natalia Cabinet Hautier, 06000 Nice (FR); Daniello, Rudy Cabinet Hautier, 06000 Nice (FR)
(74) Mandataire: Hautier, Jean-Louis

(57) **Abrégé**

La présente invention concerne un système de réservation de produits de voyage comportant un système informatique central de traitement des requêtes d'utilisateur comprenant des moyens pour calculer et retourner à l'utilisateur une information de prix de vente relativement à des produits de voyage, ledit système informatique central étant accessible depuis au moins un poste utilisateur. Selon l'invention, le système de réservation comprend:
- une base de données contenant des règles de détermination de l'appartenance à une famille de tarifs pour chaque tarif de voyage,
- un moteur de recherche des produits répondants aux critères d'entrée d'une requête d'utilisateur et des tarifs associés, ledit moteur de recherche étant en communication avec ladite base de données pour accéder aux règles de détermination et les appliquer aux produits du voyage répondant aux critères d'entrée, pour retourner au poste utilisateur, pour affichage, une réponse contenant des informations relatives aux produits répondant aux critères d'entrée en les triant par famille de tarifs.

L'invention concerne également un procédé de traitement du système de réservation.

Application aux systèmes de réservation par ordinateur pratiquant des recherches de bas tarifs.

## Description

La présente invention concerne un système ainsi qu'un procédé de traitement d'une requête d'un utilisateur dans lequel on calcule et on retourne à l'utilisateur une information de prix de vente relativement à des produits de voyage.

L'invention s'appliquera de manière non limitative mais principalement à des produits de voyage du type vols opérés par des transporteurs aériens sur un marché domestique (interne à un pays ou une région déterminée) ou à l'international.

En particulier, la présente invention a trait à un système et un procédé permettant à l'utilisateur de visualiser un grand nombre de tarifs de produits de voyages disponibles en réponse à sa requête et ce en observant les critères d'incitation de vente du fournisseur de voyages. La notion de fournisseur de voyages couvre tout type d'entité commerciale offrant des solutions de voyages à des clients. Cela inclut, par conséquent, notamment les compagnies aériennes, les agences de voyage en ligne telles que celles actuellement connues sous la marque OPODO® ainsi que les agences de voyages traditionnelles.

Actuellement, des produits puissants de recherche de tarifs sont utilisés par les fournisseurs de voyage pour offrir à leurs clients un panel important de solutions de voyages à bas tarifs en réponse à des requêtes. Grâce à la montée en puissance continue des matériels informatiques, ces produits sont capables de combiner un très grand nombre de tarifs avec un grand nombre d'itinéraires possibles dans l'objectif de trouver la solution de voyage la moins chère qui correspond à la requête du client.

Ce type de produit de recherche de bas tarifs représente une part de marché de plus en plus importante dans le domaine de l'industrie de distribution de voyages. Une conséquence de l'utilisation généralisée de tels outils de recherche est l'impact négatif qu'elle entraîne sur les profits du fournisseur de voyages. En effet, malgré l'attrait que représentent de tels outils pour les clients, et l'augmentation du chiffre d'affaires inhérent, on constate une baisse de profitabilité pour une requête en voyage donnée puisque seul le plus bas tarif est offert.

Pour contrer cette tendance à la recherche systématique du plus bas tarif et rester profitable, les fournisseurs de voyages ont actuellement besoin de réaliser des ventes incitatives de leurs places de transport en mettant en évidence les services additionnels procurés à des tarifs plus élevés. Simultanément, pour rester compétitifs, ils ont aussi besoin de proposer les plus bas tarifs disponibles pour capter la clientèle sur ce type de marché et, en particulier, par l'intermédiaire de sites Internet de distribution directe.

Généralement, la distribution directe de fourniture de services de voyages est basée sur des systèmes dénommés « Low fare search » (recherche de bas tarifs) et propose plusieurs solutions de voyages à bas tarifs. Cependant, ces produits ciblent uniquement la fourniture de solutions de voyages aux tarifs les plus bas sans proposer aucune alternative, notamment sur des types de tarifs qui donnent satisfaction aux besoins de ventes incitatives des fournisseurs de voyages. Généralement, les fournisseurs sont ainsi capables de fournir un grand nombre de solutions de voyages à bas tarifs mais ne peuvent pas offrir des solutions couvrant plusieurs classes de tarifs pour un même itinéraire de voyage de façon à refléter différents niveaux de restriction de voyage (par exemple non remboursable, remboursable avec frais, remboursable ou encore sans restriction) et/ou différents services additionnels (par exemple type de cabine). Le client n'est, par conséquent, pas à même de mettre en compétition et de comparer les différentes solutions offertes avec différentes restrictions et services additionnels, ce qui induit que ce type de tarif plus haut de gamme est beaucoup plus rarement réservé, conduisant à une perte de profit pour le fournisseur de voyages.

Il existe donc actuellement un besoin de proposer un système permettant aux fournisseurs de voyages de mettre à la vente différentes solutions de voyage répondant à la fois aux critères d'entrée de la demande de l'utilisateur et aux paramètres d'incitation de vente établis par le fournisseur de voyages. En particulier, le fournisseur de voyages devrait être à même de proposer simultanément plusieurs solutions correspondant à des tarifs variés mettant en exergue, pour les tarifs les plus élevés, les avantages qu'ils présentent.

L'invention apporte une solution à ce besoin et propose, pour ce faire, un procédé et un système de traitement d'une requête d'un utilisateur mettant en oeuvre une base de données contenant des règles de détermination de l'appartenance à au moins une famille de tarifs pour chaque tarif de voyage. Lors du traitement des requêtes d'information relativement à des produits de voyage adressées par un utilisateur, le fournisseur de voyages peut retourner, par l'intermédiaire du système de l'invention, différentes solutions, chacune présentée dans une famille de tarifs prédéfinie. Les niveaux de restriction et de services offerts par chaque famille de tarifs peuvent être soulignés au client de façon à l'inciter à choisir de telles solutions de voyage.

En particulier, dans le cas de services en ligne (par exemple par le biais d'un réseau de large extension de type Internet mettant en jeu des postes clients et un site web) l'utilisateur final sera à même de consulter par affichage une série de solutions de voyage dans différentes familles de tarifs.

Un des avantages de l'invention est de permettre au fournisseur de voyages d'organiser ses tarifs de sorte à les proposer efficacement à la vente en répondant à ses critères d'incitation de vente. Cette organisation peut se faire suivant des conditions géographiques (définition du marché) et temporelles (intervalle de temps applicable).

Un autre avantage de l'invention est d'être facilement mise à jour par la création d'une base de données dont l'accès en temps réel permet une prise en compte immédiate des modifications. Ce point est particulièrement avantageux dans la mesure où il permet une adaptation très fine des règles de vente mises en oeuvre par le fournisseur de voyages, notamment en fonction de l'évolution du marché.

Un autre avantage de l'invention est que les caractéristiques qui la composent peuvent être aisément intégrées dans un système de réservation par ordinateur traditionnel en implémentant une base de données contenant des données spécifiques accessibles par le biais d'un moteur de recherche apte à répondre aux requêtes des utilisateurs.

Un autre avantage de l'invention est que les règles de détermination de l'appartenance à une famille de tarifs sont administrables par le fournisseur de voyage lui-même qui possède ainsi une grande liberté d'intervention sur la définition de ses formules d'incitation de vente tout en s'intégrant dans un système de réservation global qui ne lui appartient pas.

D'autres buts et avantages apparaîtront au cours de la description qui suit d'un mode préféré de réalisation de l'invention qui n'a cependant pas pour but de la limiter.

La présente invention concerne un système de réservation de produits de voyage comportant un système informatique central de traitement des requêtes d'utilisateur comprenant des moyens pour calculer et retourner à l'utilisateur une information de prix de vente relativement à des produits de voyage, ledit système informatique central étant accessible depuis au moins un poste utilisateur. Selon l'invention, le système de réservation comporte :
- une base de données contenant des règles de détermination de l'appartenance à une famille de tarifs pour chaque tarif de voyage,
- un moteur de recherche des produits répondant aux critères d'entrée d'une requête d'utilisateur et des tarifs associés, ledit moteur de recherche étant en communication avec ladite base de données pour accéder aux règles de détermination et les appliquer aux produits du voyage répondant aux critères d'entrée, pour retourner au poste utilisateur, pour affichage, une réponse contenant des informations relatives aux produits répondant aux critères d'entrée en les triant par famille de tarifs.

De façon préférée, ce système se présente suivant les variantes énoncées ci-après :
- la base de données inclut des classes commerciales des familles de tarifs associant un groupe de familles de tarifs et un marché géographique prédéfini, pour un ensemble de dates de voyage prédéterminé,
- les familles de tarifs de chaque classe commerciale de familles de tarifs comportent un rang hiérarchique,
- il comporte un dispositif d'interface relié par un réseau de communication, d'une part au poste utilisateur et, d'autre part, au système informatique central,
- le réseau de communication est un réseau de large extension,
- le dispositif d'interface est un serveur web coopérant avec un programme de navigation résidant dans le poste utilisateur pour fournir une interface utilisateur graphique au poste utilisateur.

L'invention a également trait à un procédé de traitement d'une requête d'un utilisateur dans lequel on calcule et on retourne à l'utilisateur une information de prix de vente relativement à des produits de voyage, comprenant les opérations suivantes :
- on crée une base de données contenant des règles de détermination de l'appartenance à au moins une famille de tarifs pour chaque tarif de voyage,
- on adresse, depuis un poste utilisateur, une requête d'information relativement à des produits de voyage pour au moins une date de voyage,
- on recherche les produits répondant aux critères d'entrée de la requête et les tarifs associés,
- on détermine la famille de tarifs de chaque produit répondant aux critères d'entrée en leur appliquant les règles de détermination et on calcule leur prix de vente,
- on retourne au poste utilisateur, pour affichage, une réponse contenant des informations relatives aux produits répondant aux critères d'entrée en les triant par famille de tarifs.

De façon préférée, ce procédé comporte les étapes additionnelles suivantes :
- on retourne au poste client, pour affichage, des informations relatives au produit répondant aux critères d'entrée ayant le prix de vente le plus bas pour chaque date de voyage,
- on sélectionne, par entrée de l'utilisateur au niveau du poste utilisateur, un des produits affichés,
- on adresse depuis le poste utilisateur, une requête en information détaillée,
- on retourne au poste utilisateur, pour affichage, une réponse contenant des informations relatives au produit sélectionné et aux autres produits répondant aux critères d'entrée pour la même date en les triant par familles de tarifs,
- pour chaque famille de tarifs, on n'affiche qu'un nombre prédéfini de produits répondant aux critères d'entrée, en commençant par le produit au prix de vente le plus bas,
- les critères d'entrée comprennent l'origine, la destination du voyage et un ensemble non nul de dates de départ,
- dans la base de données, on crée des classes commerciales de familles de tarifs associant au moins un groupe de familles de tarifs à un marché géographique prédéfini, pour un ensemble de dates de voyage prédéterminé,
- on sélectionne au moins une classe commerciale de familles de tarifs et on ne traite la requête de l'utilisateur que pour les produits de voyage inclus dans la ou les classes commerciales de famille de tarifs sélectionnées,
- la sélection de la ou les classes commerciales de familles de tarifs est opérée par une entrée au niveau du poste utilisateur,
- la sélection de la ou les classes commerciales de familles de tarifs est opérée par un administrateur,
- dans la base de données, pour chaque classe commerciale de familles de tarifs, on affecte un rang hiérarchique à chaque famille de tarifs,
- on affiche au niveau du poste utilisateur des informations relatives aux produits répondant aux critères d'entrée dans l'ordre de leur rang hiérarchique,
- les règles de détermination de l'appartenance à une famille de tarifs comportent, pour chaque famille de tarifs, un jeu d'attributs qu'un tarif doit présenter pour appartenir à ladite famille de tarifs,
- on accède en temps réel aux données de la base de données.
- les produits de voyage sont des vols de transports aériens inclus dans un marché domestique ou international.

Les dessins ci-joints sont donnés à titre d'exemples et ne sont pas limitatifs de l'invention. Ils représentent seulement un mode de réalisation de l'invention et permettront de la comprendre aisément.
La figure 1 présent un exemple de l'architecture globale du système selon l'invention.
La figure 2 montre plus précisément les données contenues dans la base de données mise en oeuvre par l'invention.
Les figures 3, 4 et 5 montrent un exemple d'interface graphique pour la gestion de familles de tarifs et, en particulier, leur mise à jour.
Les figures 6 et 7 présentent un premier exemple de traitement de requêtes avec une fourniture de solutions tarifaires par itinéraire aller-retour.

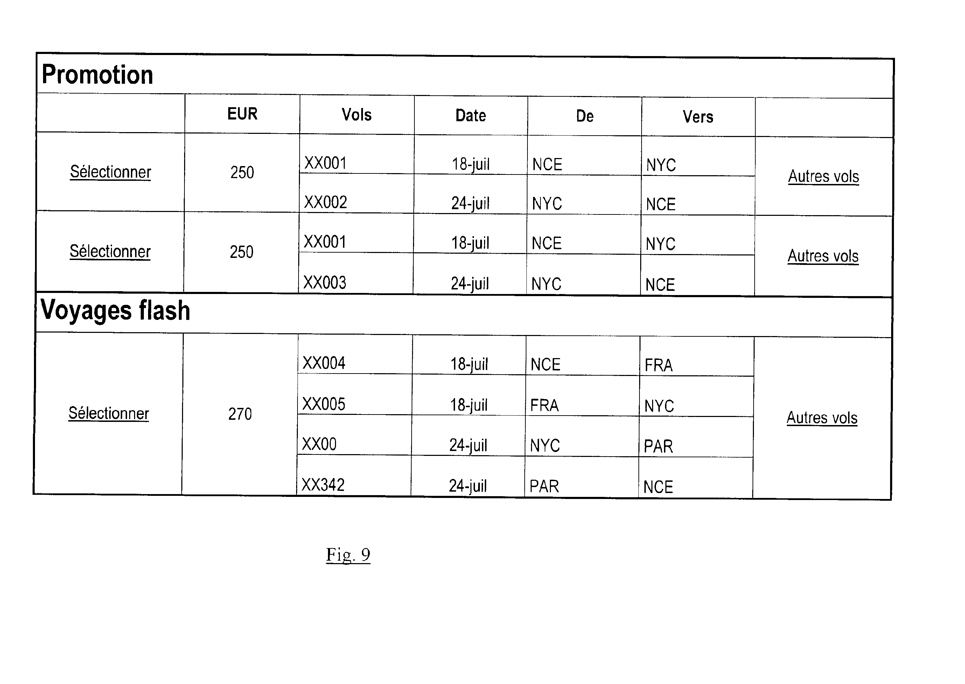

Les figures 8 et 9 présentent la fourniture de solution tarifaire du type OFFRE SPECIALE.
Les figures 10 et 11 présentent de telles solutions tarifaires avec une tarification par paire origine/destination.
Les figures 12 et 13 présentent deux exemples de définition d'une classe commerciale de famille de tarifs et la figure 14 illustre un exemple de définition de famille de tarifs avec mise en oeuvre de jeux d'attributs qu'un tarif doit présenter pour appartenir à une famille de tarifs.

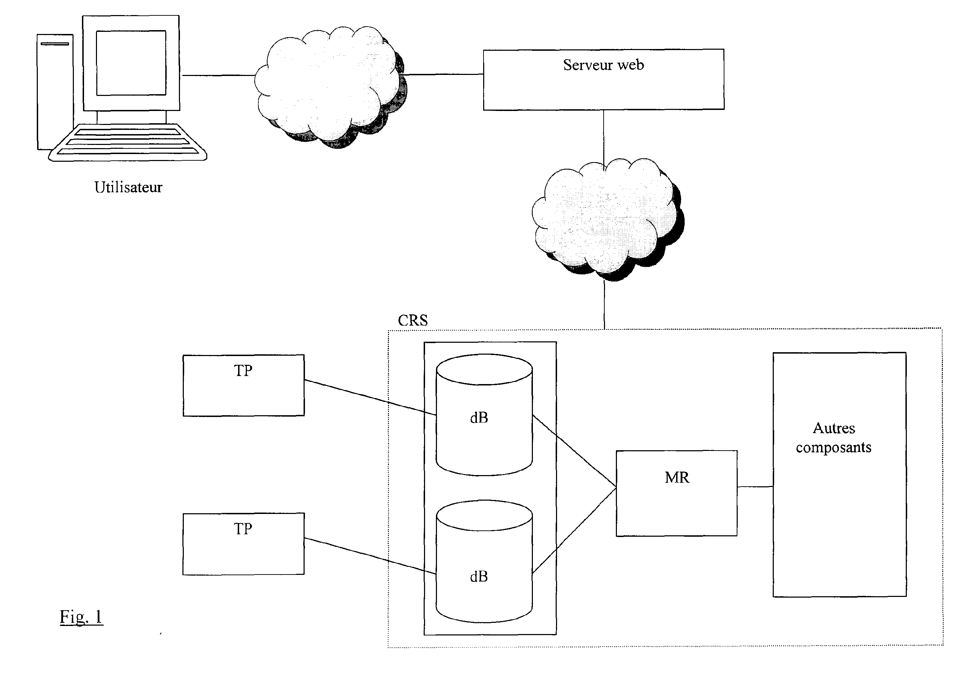

On a représenté en figure 1 une architecture possible du système selon l'invention dans lequel différents composants communiquent par l'intermédiaire de réseaux tels que des réseaux de large extension et en particulier l'Internet. Suivant le mode de réalisation illustré, un utilisateur se connecte par l'intermédiaire d'un poste utilisateur à un serveur de site web suivant une configuration informatique de communication classique. En particulier, la communication peut s'effectuer par l'intermédiaire de composants informatiques du type serveur mandataire (usuellement dénommé PROXY) et de passerelles (généralement dénommées GATEWAY). Un même type de communication est utilisable entre le serveur de site web et d'autres composants intégrés dans le cadre dénommé CRS et correspondant au système de réservation par ordinateur.

Dans ce cadre, le système de réservation par ordinateur comprend différents composants aptes à recevoir des requêtes concernant la disponibilité de produits de voyage, à vérifier la disponibilité auprès des bases d'inventaire des fournisseurs de voyages (par exemple les bases d'inventaire de compagnies aériennes) et à fournir une information tarifée à l'utilisateur.

Outre ces composants usuellement implémentés dans un système de réservation par ordinateur (CRS), le système selon l'invention comporte une base de données (dB) contenant des règles de détermination de l'appartenance à une famille de tarifs pour chaque tarif de voyage ainsi q'un moteur de recherches (MR) placé en communication avec la base de données. Le moteur (MR) est configuré pour traiter les requêtes en information adressées par l'utilisateur. Un tel moteur (MR) est semblable à ceux utilisés dans des systèmes de recherche de bas tarifs existants (Low Fare search engine).

Suivant un mode de réalisation préféré, le ou les fournisseurs de voyages (TP) ont accès à la base de données (dB) notamment pour réaliser sa mise à jour ou les modifications souhaitées concernant les règles de détermination qui seront décrites plus précisément ci-après.

Il faut rappeler que l'invention permet de proposer à la vente différentes solutions tarifaires à l'utilisateur. Pour y parvenir, les produits de voyage sont, selon l'invention, triés suivant la famille de tarifs à laquelle ils appartiennent. Les paramètres de ce tri et, en conséquence, les critères d'appartenance à une famille de tarifs déterminent les types de solution de voyage qui seront proposés à la vente.

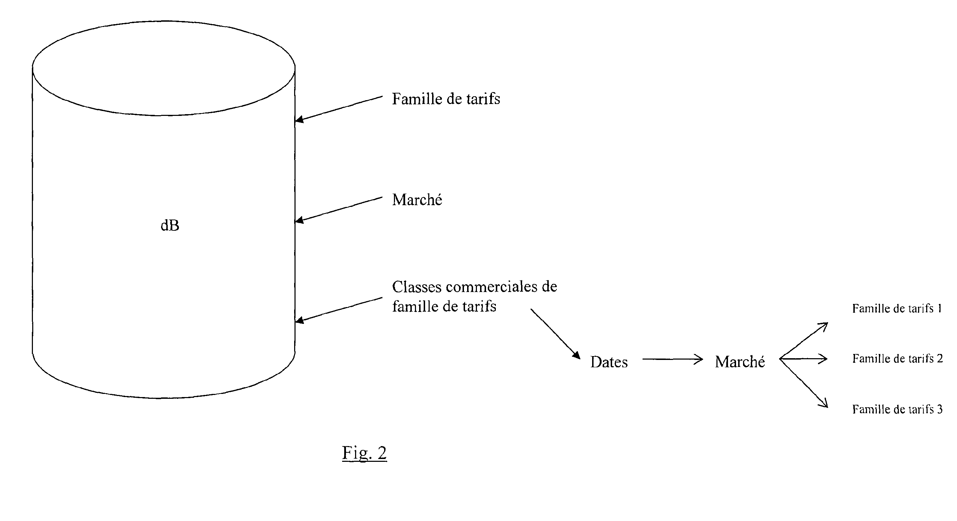

On a représenté en figure 2 les informations contenues dans la base de données (dB). A cette figure, les familles de tarifs sont renseignées dans la base de données. Sont également définis des marchés correspondant à des zones géographiques d'application d'un ensemble de famille de tarifs. Ces marchés peuvent être des territoires nationaux, régionaux ou encore internationaux. Il est par ailleurs possible que le marché soit systématiquement défini comme mondial.

La base de données dB permet également de définir des classes commerciales de famille de tarifs. Ces classes commerciales sont associées à un groupe de famille de tarifs et à un marché géographie pour un ensemble de dates de voyage prédéterminé.

En connaissant les dates pertinentes et le marché considéré, il est possible de retrouver les familles de tarifs appartenant à la classe commerciale de famille de tarifs et, ensuite, de connaître leurs attributs.

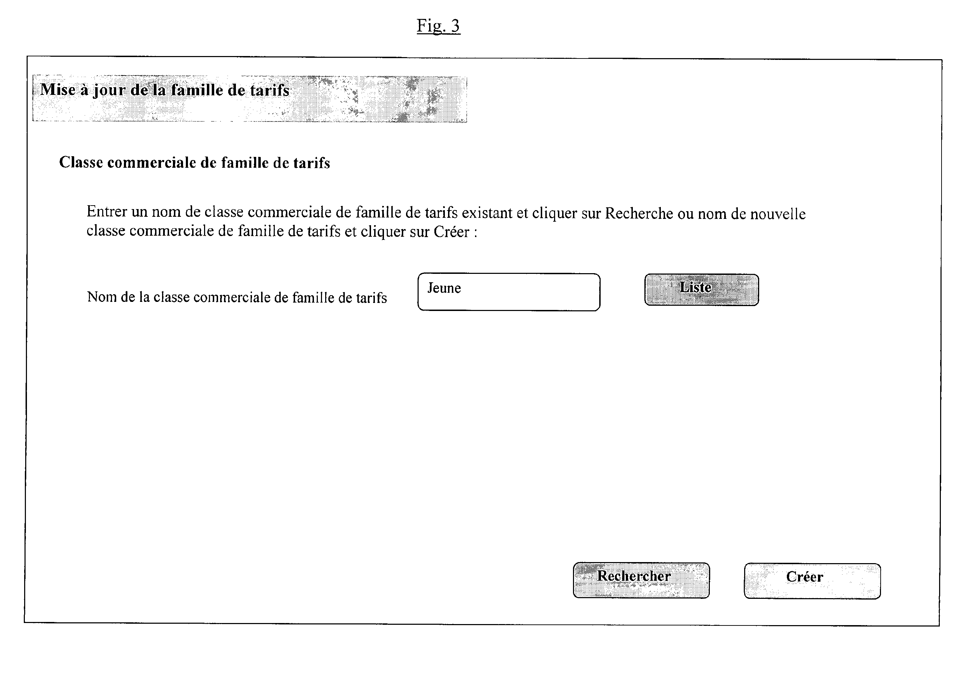

On présente ci-après un exemple de mise à jour de famille de tarifs en référence aux figures 3 à 5 pour la modification (ajouts, mise à jour, ...) de la base (dB).

La figure 3 montre un exemple de fenêtres affichables au niveau d'un poste d'administrateur pour la mise à jour de familles de tarifs. En figure 3, l'utilisateur renseigne la page affichée en indiquant le nom de la classe commerciale de famille de tarifs sur laquelle il veut travailler. Eventuellement, il peut demander l'affichage de la liste des classes commerciales déjà définies. Par l'icône RECHERCHER, l'utilisateur peut rechercher les éléments de définition d'une classe commerciale de famille de tarifs dont il a saisi le nom. Par l'icône CREER, il peut ajouter la classe commerciale de famille de tarifs sous le nom qu'il a préalablement saisi.

Dans l'exemple représenté, le mot JEUNE a été saisi et l'utilisateur a cliqué sur l'icône RECHERCHER.

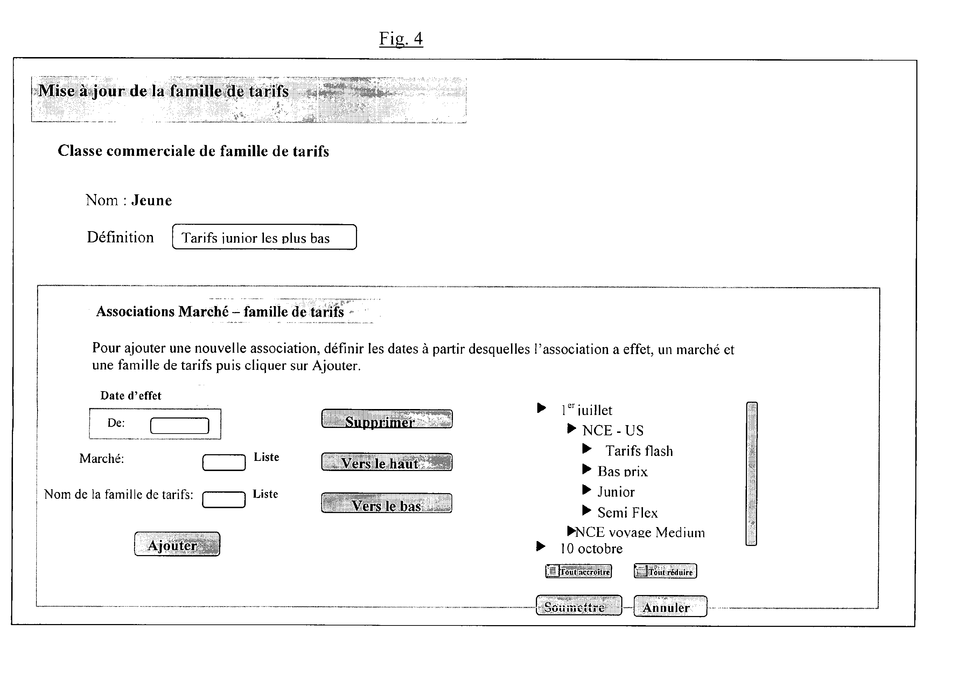

Il parvient alors à la fenêtre illustrée en figure 4 lui présentant les éléments de définition de la classe commerciale de famille de tarifs dénommée JEUNE. Une brève définition commerciale est donnée à cette classe sous le terme « Tarifs junior les plus bas ».

Les critères d'association marché-famille de tarifs sont également présentés à cette page et ce, pour des dates déterminées. Dans l'exemple, pour l'intervalle de dates compris entre le 1^{er} juillet et le 10 octobre, et pour le marché Nice - Etats-Unis (NCE-US), la classe commerciale est associée aux familles de tarifs dénommées : TARIFS FLASH, BAS PRIX, JUNIOR, SEMI-FLEX.

Ces noms correspondent à des familles de tarifs préalablement entrées dans la base de données.

Par la fenêtre de la figure 4, l'administrateur peut modifier les critères de définition de la classe commerciale de familles de tarifs par exemple en modifiant ou en ajoutant des dates, des marchés applicables ou encore les familles de tarifs associées. Par exemple, l'utilisateur peut cliquer sur la famille de tarifs TARIF FLASH pour modifier la définition de cette famille de tarifs.

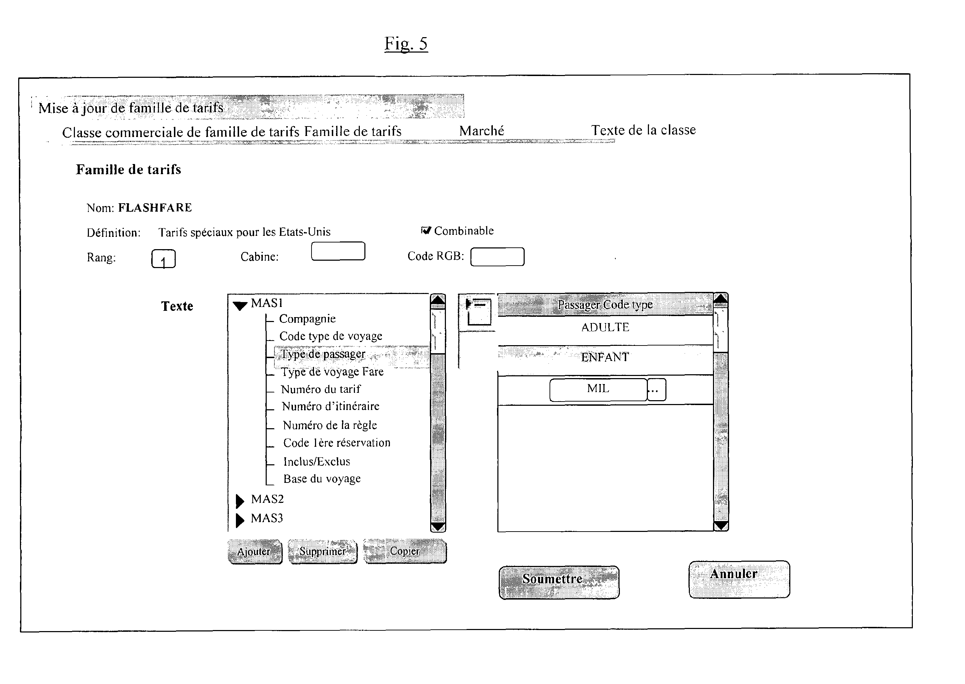

En se reportant à la figure 5, l'administrateur arrive à l'affichage indiqué pour la famille dénommée TARIF FLASH. Une brève définition commerciale en est donnée sous l'expression « tarifs spéciaux pour les Etats-Unis ».

Différents attributs sont organisés sous forme d'un jeu d'attributs (MAS1) indiquant différentes caractéristiques de cette famille. Pour appartenir à cette famille de tarifs, les produits de voyage doivent présenter une valeur prédéterminée pour chacun de ses attributs. Il est possible d'utiliser plusieurs jeux d'attributs (MAS1, MAS 2, MAS3) pour définir les règles d'appartenance à cette famille de tarifs.

A titre préféré, les familles de tarifs d'une classe commerciale de familles de tarifs présente un ordre hiérarchique repris sous le paramètre RANG à la figure 5. Dans ce cadre, l'exemple montre que la famille TARIFS FLASH présente le rang 1 pour la classe commerciale de familles de tarifs jeune. A l'affichage des solutions de voyage en réponse à des requêtes de clients, ce sont alors les solutions proposées dans le cadre de la famille TARIFS FLASH qui seront affichées en premier lieu. L'affichage des solutions pour les autres solutions de tarifs s'effectuera par ordre hiérarchique décroissant.

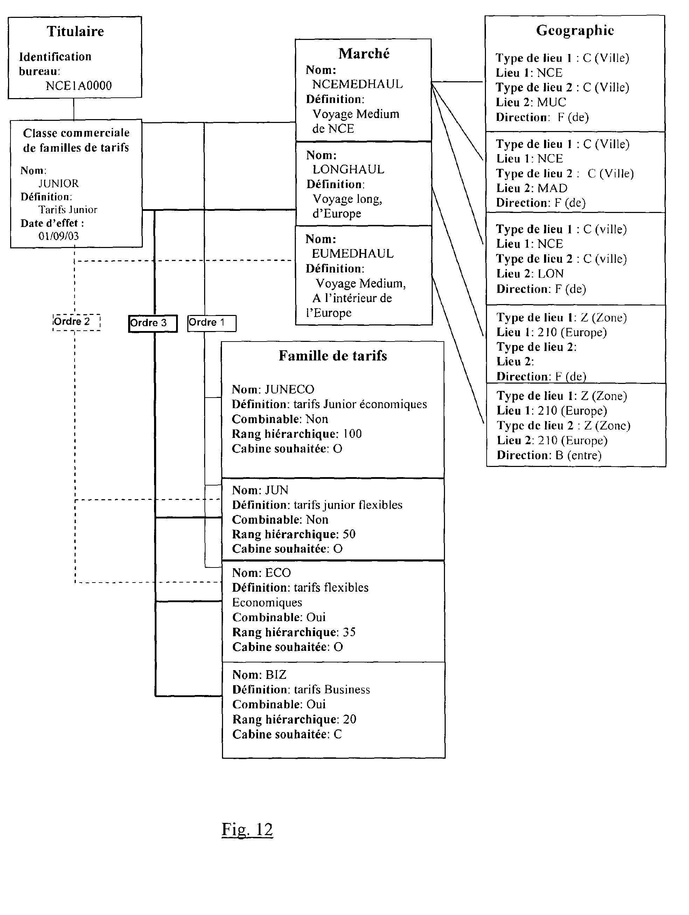

On a représenté en figure 12 un diagramme illustrant la définition d'une classe commerciale de familles de tarifs.

A cette figure, on a défini un identifiant de titulaire de la classe commerciale de familles de tarifs, par exemple pour repérer la définition de cette classe commerciale appartenant (ou utilisée) à un fournisseur de voyages prédéterminé afin de le distinguer des classes commerciales de familles de tarifs appartenant (ou utilisées) à d'autres fournisseurs de voyages.

Dans le cas représenté, la classe commerciale de familles de tarifs porte le nom JUNIOR et comporte une date d'effet prédéterminée, à savoir le 1^{er} septembre 2003. Cette classe commerciale de familles de tarifs JUNIOR est applicable sur le marché défini par l'association des marchés élémentaires portant les noms suivants : NCEMEDHAUL, LONGHAUL et EUMEDHAUL. Une indication plus précise de la portée géographique de ces marchés est par ailleurs indiquée dans la colonne GEOGRAPHIE. Les marchés peuvent être un ensemble d'origines et de destinations sous forme de paires de villes ou porter sur des zones géographiques plus larges, par exemple France, Europe ou Etats-Unis. Un marché est complètement défini par l'indication d'un espace géographique d'origine et d'un espace géographique de destination des voyages.

Les dates d'application de la classe commerciale de familles de tarifs et le marché approprié étant déterminés, on peut connaître les familles de tarifs qui appartiennent à la classe commerciale de familles de tarifs JUNIOR. En l'espèce, ces familles de tarifs sont dénommées JUNECO, JUN, ECO et BIZ. Dans le cas représenté, ces familles de tarifs ne sont pas applicables à tous les marchés. Au contraire, pour le marché NCEMEDHAUL, seules les familles de tarifs JUNCEO, JUN et ECO sont applicables. Au contraire, pour le marché EUMEDHAUL, les familles de tarifs JUN et ECO sont concernées. Enfin, pour le marché LONGHAUL, les familles de tarifs JUN, ECO et BIZ sont inclues. Un ordre hiérarchique (ordre 1, 2 ou 3) est donné dans cette définition pour indiquer la préséance dans l'ordre d'étude des marchés.

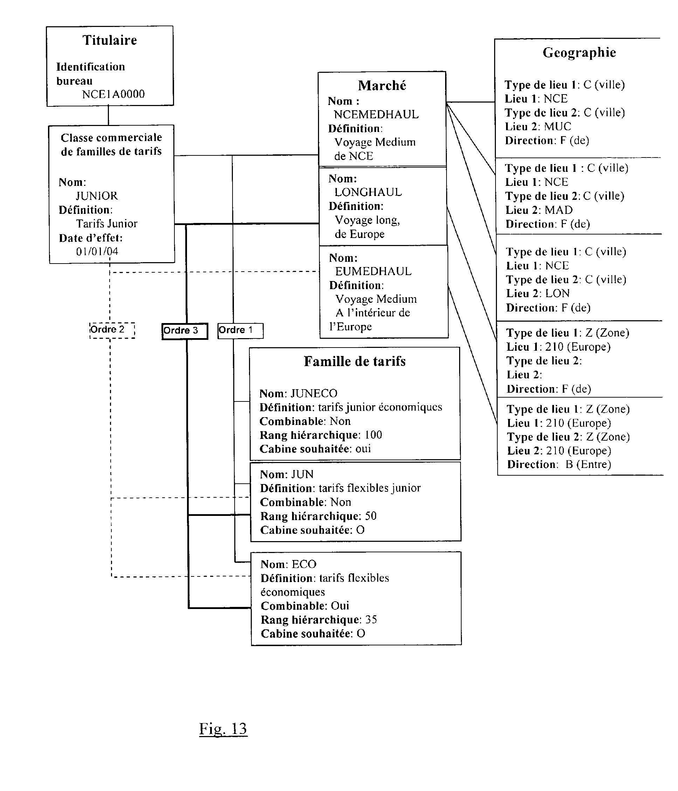

Un autre exemple de définition de classe commerciale de familles de tarifs est donné en figure 13 avec une date d'effet au 1^{er} janvier 2004 et un marché défini comme dans l'exemple de la figure 12. Contrairement à la figure 13, pour les dates considérées, les familles de tarifs inclues dans la classe commerciale de familles de tarifs pour les marchés en cause sont différentes.

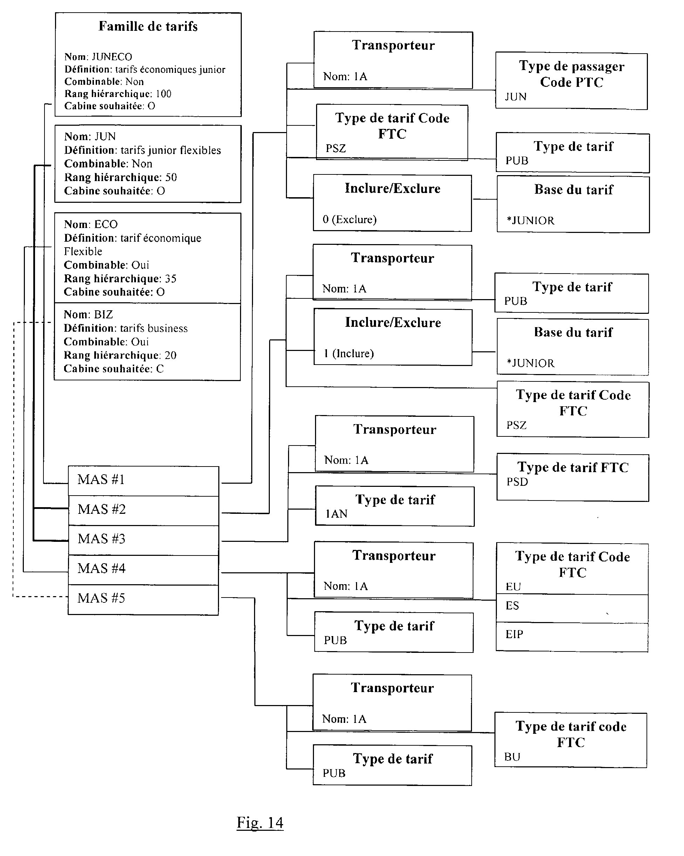

La figure 14 est un diagramme montrant plus précisément un exemple de règles de détermination d'appartenance à une famille de tarifs. Dans ce cadre, on a représenté diverses familles de tarifs sous les dénominations JUNECO, JUN, ECO et BIZ qui étaient déjà illustrées en figure 12 pour la définition de la classe commerciale de familles de tarifs JUNIOR.

Pour déterminer quels tarifs de produit de voyage appartiennent à ces familles de tarifs, on définit des jeux d'attributs qu'un tarif doit présenter pour appartenir à une famille. Ces jeux d'attributs sont repérés MAS1, MAS2, MAS3, MAS4 et MAS5 en figure 14. Par exemple, dans le cas de la famille de tarifs JUNECO, le jeu d'attributs MAS1 doit être vérifié pour qu'un tarif d'un produit de voyage appartienne à cette famille. Le jeu d'attribut MAS1 est ici formé par une valeur de transporteur (ici 1A), une valeur de code de type de passager (ici JUN pour jeune), une valeur de codification de type de tarif (ici PSZ), une valeur de type de tarif (ici PUB). En outre, un paramètre d'inclusion ou d'exclusion à d'autres familles de tarifs peut être utilisé. En l'espèce, la famille JUNECO exclut les tarifs qui sont déjà dans la famille de tarifs JUNIOR.

Les jeux d'attributs des autres familles de taris (JUN, ECO et BIZ) sont définis de façon semblable comme illustré en figure 14.

Les classes commerciales de familles de tarifs ainsi déterminées, en particulier par un administrateur appartenant à un fournisseur de voyages telle une compagnie aérienne, les requêtes d'utilisateur concernant une information sur des produits de voyage peuvent être traitées. Dans ce traitement, on appliquera les règles fixées pour retourner les informations tarifaires. En particulier, les produits de voyage proposés en réponse aux requêtes des utilisateurs dépendront des règles fixées par l'administrateur de la base de données (dB).

Divers exemples de traitement de requête sont décrits ci-après.

Dans sa requête en information, l'utilisateur peut préciser la ou les classes commerciales pour lesquelles il souhaite obtenir une information concernant les produits de voyage. Par exemple, par l'intermédiaire d'un serveur web, l'utilisateur peut préciser qu'il souhaite des classes commerciales correspondantes aux offres promotionnelles, aux offres pour un public déterminé (telles des offres destinées aux jeunes). Cela étant, la sélection des classes commerciales pour lesquelles une information sur les produits de voyage est à fournir à l'utilisateur suite à sa requête peut être opérée en amont par un administrateur du fournisseur de voyages telle une compagnie aérienne.

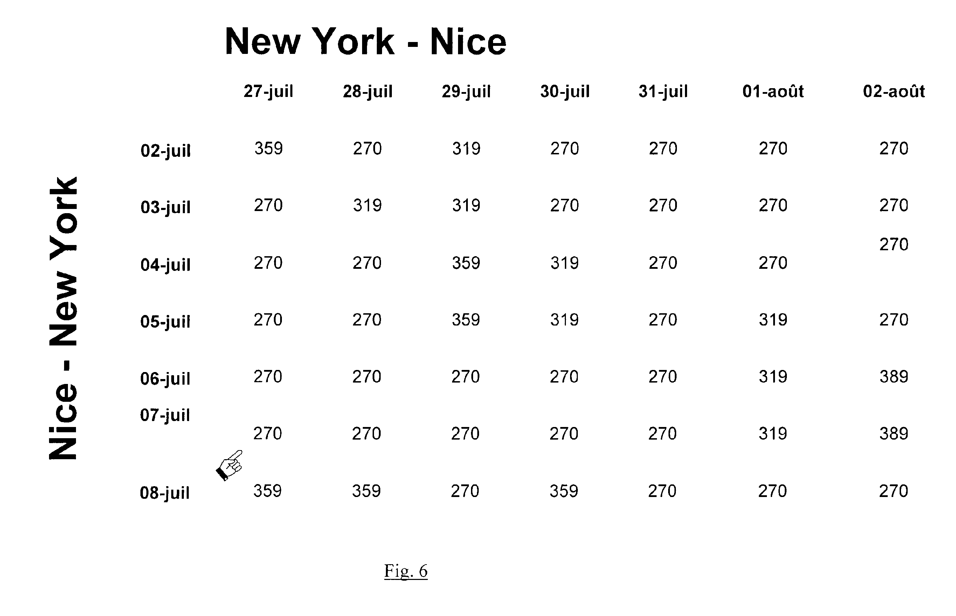

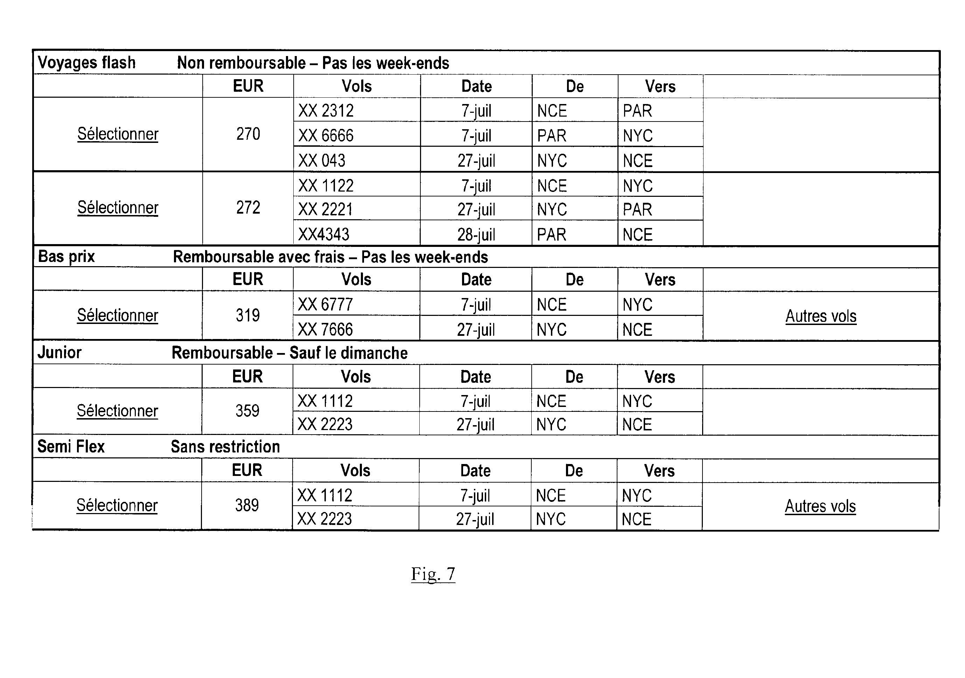

Dans le cas représenté aux figures 6 et 7, l'utilisateur a d'abord adressé, par son poste utilisateur, une requête d'information relativement à des vols de transporteurs aériens pour un ensemble de dates de départ et d'arrivée prédéterminé. En l'espèce, l'utilisateur a indiqué son souhait de partir depuis Nice jusqu'à New York entre le 2 et le 8 juillet et de revenir vers Nice entre le 27 juillet et le 2 août. Dans le cas représenté, les classes commerciales de familles de tarifs applicables ont été définies par le fournisseur de voyages en amont. La requête d'information est transmise par l'intermédiaire du serveur web au système central pour traitement.

A ce stade, on effectue préférentiellement une première étape d'information de l'utilisateur en lui retournant, pour les dates considérées, un tableau lui donnant des informations relatives aux produits répondant aux critères qu'il a entrés et ayant le prix de vente le plus bas pour chaque date de voyage.

Ensuite, l'utilisateur sélectionne, par exemple par le biais d'un pointeur, l'un des produits de voyage (dans le cas représenté en cliquant sur le tarif qui lui est associé et affiché).

De façon automatique, cette sélection produit l'adressage depuis le poste utilisateur d'une requête en information détaillée pour le produit de voyage considéré.

Le système central opère ainsi un traitement approfondi dans lequel on retourne au poste utilisateur une réponse contenant des informations relatives à tous les produits de voyage répondant aux critères d'entrée, pour les critères d'origine, de destination et de date du produit de voyage sélectionnés dans la première fenêtre par l'utilisateur et ce en les triant par famille de tarifs.

Ainsi, après le premier écran de sélection, l'utilisateur reçoit une réponse complète comprenant non seulement des informations relatives au produit de voyage ayant le tarif le plus bas mais aussi d'autres solutions de voyage et, en particulier, des solutions appartenant à des familles de tarifs différentes avec un prix pouvant être quelque peu plus élevé mais présentant des prestations d'un niveau supérieur. Un exemple d'affichage pour l'utilisateur est présenté en figure 7.

Cette configuration permet de combiner les fonctionnalités de recherche des bas prix (réponse initiale) avec des fonctionnalités d'élargissement des solutions proposées (deuxième réponse).

Il est cependant possible de fournir directement la réponse élargie, notamment si les critères d'entrée ne comportent pas d'intervalle de date.

Un administrateur peut déterminer, à l'avance, le nombre de produits de voyage qui seront affichés à l'utilisateur dans une famille de tarifs prédéterminée. Eventuellement, pour afficher plus de solutions dans une famille de tarifs, un lien hypertexte sous le terme « autres vols » est implémentable, ce qui permet d'accéder à d'autres produits de voyage au même prix que celui ou ceux affichés, dans la famille de tarifs considérée.

Dans l'exemple illustré, l'utilisateur obtient une information relativement au vol le moins cher disponible à 270 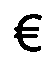 . Dans la même famille de tarifs (VOYAGE FLASH), une autre solution lui est proposée au tarif de 272 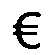 . Ensuite, d'autres solutions sont proposées dans les familles de tarifs différentes dénommées BAS PRIX, JUNIOR ET SEMI-FLEX. Un libellé rapide et adaptable permet à l'utilisateur de connaître les prestations générales offertes dans chacune de ces familles de tarifs suivant les restrictions (non remboursable, remboursable, etc.) et les conditions de vol (par exemple les jours où ces tarifs sont applicables).

Ces informations ainsi synthétisées permettent au client de choisir le vol le plus approprié à ses besoins qui n'est pas systématiquement le vol présentant le tarif le moins cher.

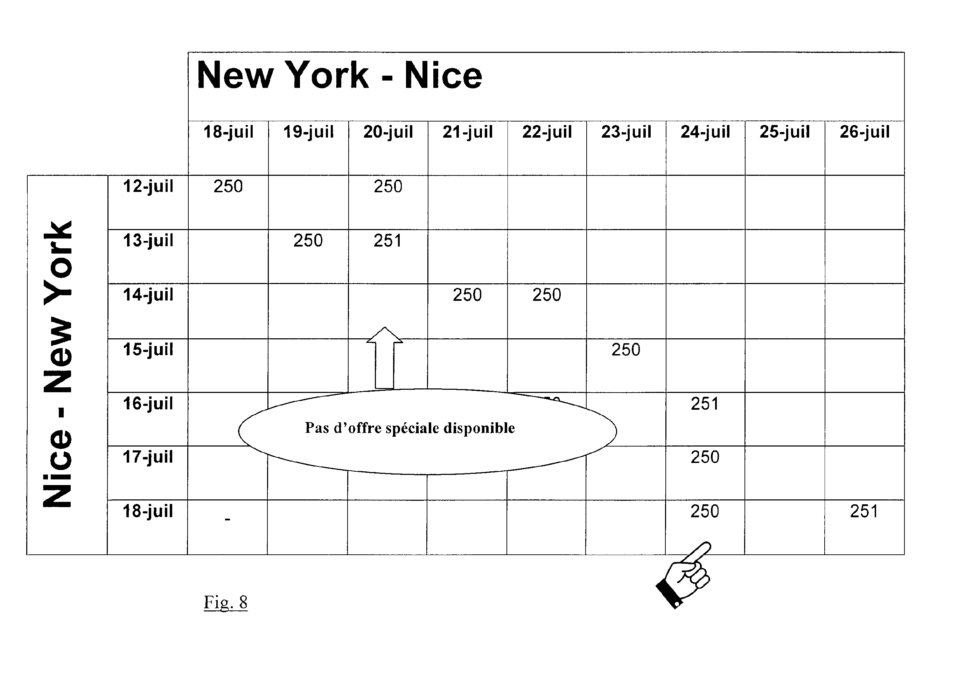

Il est par ailleurs possible que, pour les critères d'entrée considérés, des produits de voyage ne soient pas disponibles dans tous les cas et en particulier pour toutes les dates souhaitées par le voyageur. Ainsi, en figure 8, sur une demande d'aller et retour Nice - New York avec des intervalles de date de départ du 12 au 18 juillet et de retour du 18 juillet au 26 juillet, les disponibilités sont limitées à certaines dates. Cela est par exemple le cas lorsque la classe commerciale de familles de tarifs et les familles de tarifs qu'elle comprend concernent des promotions dont le caractère exceptionnel ne permet pas de proposer à la vente des produits de voyage pour toutes les dates.

Dans le cas représenté à la figure 8, les tarifs les plus bas de produits de voyage répondant aux critères d'entrée sont affichés pour une sélection par l'utilisateur. Par exemple, l'utilisateur sélectionne le tarif de 250 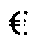 pour un aller et retour du 18 juillet et 24 juillet. Il s'ensuit l'envoi d'une requête en information complémentaire vers le système central pour produire le traitement évoqué précédemment et l'affichage d'informations tarifaires sur les produits de voyage répondant aux critères pour différentes familles de tarifs inclues dans la classe commerciale prédéterminée. C'est ainsi que l'utilisateur peut consulter l'affichage des familles PROMOTION et VOYAGES FLASH.

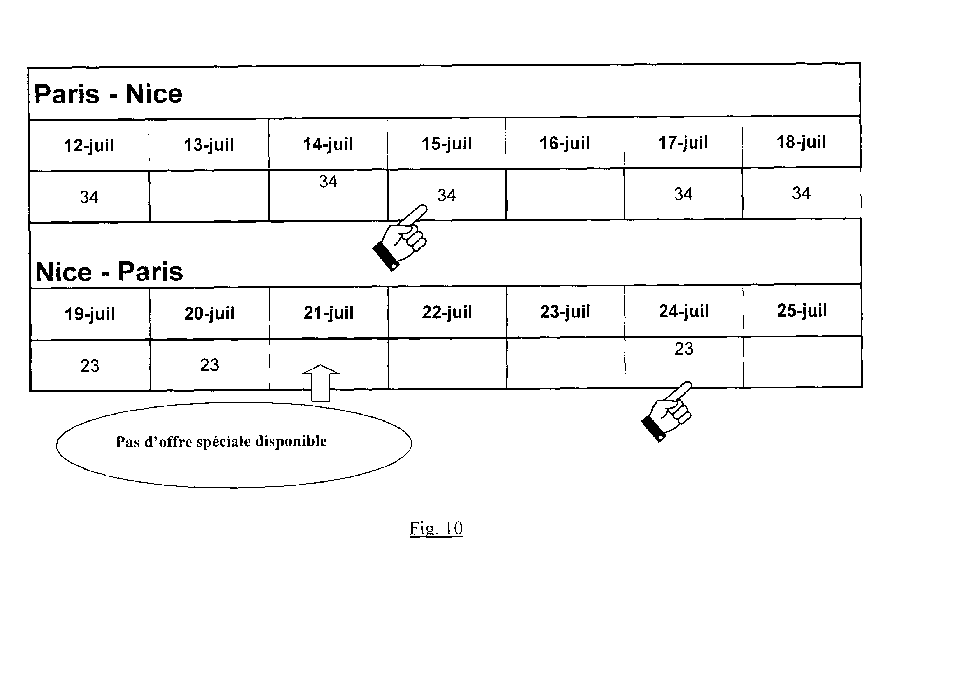

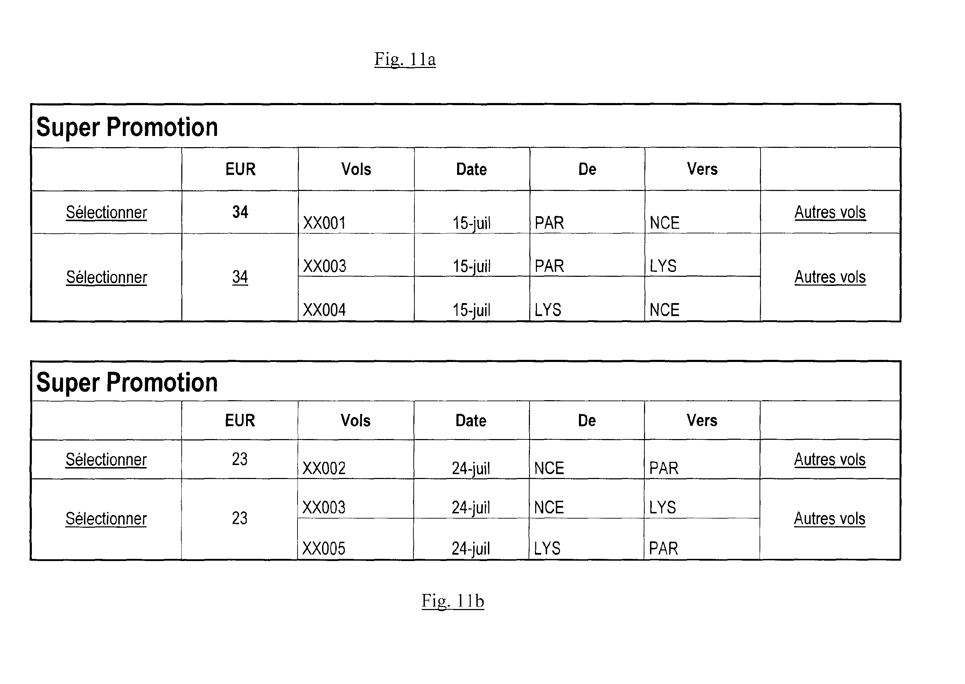

Un exemple similaire est donné aux figures 10 et 11 a, 11 b avec une présentation légèrement différente faisant apparaître un premier affichage par trajet (Paris-Nice puis Nice-Paris) au lieu d'un tableau à deux entrées aller et retour.

En réponse, le deuxième affichage produit deux tableaux distincts avec les produits correspondant aux critères ici uniquement dans la famille de tarifs SUPERPROMOTION.

Il est ici entendu que l'utilisateur peut s'entendre d'un client final mais aussi d'un agent de voyage ou encore d'un employé d'une entreprise disposant d'un service de gestion de voyages interne.

De même, les produits de voyage s'entendent de places de voyage pour un trajet déterminé à une date déterminée ou pour un intervalle de dates ; il peut s'agit d'allers simples ou d'allers-retours avec un seul segment ou la présence d'escales.

Le terme système de réservation ici utilisé s'entend d'un système informatique au moins apte à renseigner l'utilisateur à propos des prix et des conditions de vente de produits de voyage mais permettant, préférentiellement également, la prise de réservation par l'utilisateur avec la délivrance ou non d'un billet.

L'administrateur chargé de la mise à jour de la base de données pourra être un employé du fournisseur de voyages (telle une compagnie aérienne) mais aussi un employé d'un système global de distribution assurant la gestion du système central de réservation (CRS).

Comme indiqué précédemment et en référence à la figure 1, l'architecture proposée inclut avantageusement un dispositif d'interface entre le poste utilisateur et le système central CRS sous forme d'un serveur web mis en communication avec le poste utilisateur et le système central CRS par le biais d'un réseau de large extension du type Internet. De cette façon, c'est le serveur web qui produit les pages à afficher au niveau du poste utilisateur qui ne requiert ainsi qu'un navigateur de conception courante (du type Internet Explorer ™) pour disposer des fonctionnalités nécessaires à l'affichage des informations et à l'envoi des requêtes d'information.

On notera enfin que le système central CRS peut être relié à plusieurs serveurs web pour fournir des informations aux utilisateurs via plusieurs sites Internet. Par exemple, un site Internet peut être spécialement dédié à un type de clientèle et n'appliquer que certaines classes commerciales de familles de tarifs alors qu'un autre site Internet sera dédié à d'autres types de clientèle en fonctionnant avec d'autres classes commerciales de familles de tarifs.

## Revendications

1. Système de réservation de produits de voyage comportant un système informatique central de traitement des requêtes d'utilisateur comprenant des moyens pour calculer et retourner à l'utilisateur une information de prix de vente relativement à des produits de voyage, ledit système informatique central étant accessible depuis au moins un poste utilisateur, **caractérisé par le fait qu'**il comporte :
- une base de données contenant des règles de détermination de l'appartenance à une famille de tarifs pour chaque tarif de voyage,
- un moteur de recherche des produits répondant aux critères d'entrée d'une requête d'utilisateur et des tarifs associés, ledit moteur de recherche étant en communication avec ladite base de données pour accéder aux règles de détermination et les appliquer aux produits du voyage répondant aux critères d'entrée, pour retourner au poste utilisateur, pour affichage, une réponse contenant des informations relatives aux produits répondant aux critères d'entrée en les triant par famille de tarifs.

2. Système selon la revendication 1 **caractérisé par le fait que**
la base de données inclut des classes commerciales des familles de tarifs associant un groupe de familles de tarifs et un marché géographique prédéfini, pour un ensemble de dates de voyage prédéterminé.

3. Système selon la revendication 2 **caractérisé par le fait que**
les familles de tarifs de chaque classe commerciale de familles de tarifs comportent un rang hiérarchique.

4. Système selon l'une quelconque des revendications 1 à 3 **caractérisé par le fait**
**qu'**il comporte un dispositif d'interface relié par un réseau de communication, d'une part au poste utilisateur et, d'autre part, au système informatique central.

5. Système selon la revendication 4 **caractérisé par le fait que**
le réseau de communication est un réseau de large extension.

6. Système selon la revendication 5 **caractérisé par le fait que**
le dispositif d'interface est un serveur web coopérant avec un programme de navigation résidant dans le poste utilisateur pour fournir une interface utilisateur graphique au poste utilisateur.

7. Procédé de traitement d'une requête d'un utilisateur dans lequel on calcule et on retourne à l'utilisateur une information de prix de vente relativement à des produits de voyage, comprenant les opérations suivantes :
- on crée une base de données contenant des règles de détermination de l'appartenance à au moins une famille de tarifs pour chaque tarif de voyage,
- on adresse, depuis un poste utilisateur, une requête d'information relativement à des produits de voyage pour au moins une date de voyage,
- on recherche les produits répondant aux critères d'entrée de la requête et les tarifs associés,
- on détermine la famille de tarifs de chaque produit répondant aux critères d'entrée en leur appliquant les règles de détermination et on calcule leur prix de vente,
- on retourne au poste utilisateur, pour affichage, une réponse contenant des informations relatives aux produits répondant aux critères d'entrée en les triant par famille de tarifs.

8. Procédé selon la revendication 7 dans lequel, si la requête d'information comporte plusieurs dates, on effectue les actions suivantes :
- on retourne au poste client, pour affichage, des informations relatives au produit répondant aux critères d'entrée ayant le prix de vente le plus bas pour chaque date de voyage,
- on sélectionne, par entrée de l'utilisateur au niveau du poste utilisateur, un des produits affichés,
- on adresse depuis le poste utilisateur, une requête en information détaillée,
- on retourne au poste utilisateur, pour affichage, une réponse contenant des informations relatives au produit sélectionné et aux autres produits répondant aux critères d'entrée pour la même date en les triant par familles de tarifs.

9. Procédé selon la revendication 7 ou la revendication 8 dans lequel, pour chaque famille de tarifs, on n'affiche qu'un nombre prédéfini de produits répondant aux critères d'entrée, en commençant par le produit au prix de vente le plus bas.

10. Procédé selon l'une quelconque des revendications 7 à 9 dans lequel les critères d'entrée comprennent l'origine, la destination du voyage et un ensemble non nul de dates de départ.

11. Procédé selon l'une quelconque des revendications 7 à 10 **caractérisé par le fait que**
dans la base de données, on crée des classes commerciales de familles de tarifs associant au moins un groupe de familles de tarifs à un marché géographique prédéfini, pour un ensemble de dates de voyage prédéterminé.

12. Procédé selon la revendication 11 dans lequel on sélectionne au moins une classe commerciale de familles de tarifs et on ne traite la requête de l'utilisateur que pour les produits de voyage inclus dans la ou les classes commerciales de famille de tarifs sélectionnées.

13. Procédé selon la revendication 12 dans lequel la sélection de la ou les classes commerciales de familles de tarifs est opérée par une entrée au niveau du poste utilisateur.

14. Procédé selon la revendication 12 dans lequel la sélection de la ou les classes commerciales de familles de tarifs est opérée par un administrateur.

15. Procédé selon l'une quelconque des revendications 11 à 14 dans lequel :
- dans la base de données, pour chaque classe commerciale de familles de tarifs, on affecte un rang hiérarchique à chaque famille de tarifs,
- on affiche au niveau du poste utilisateur des informations relatives aux produits répondant aux critères d'entrée dans l'ordre de leur rang hiérarchique.

16. Procédé selon l'une quelconque des revendications 7 à 15 dans lequel les règles de détermination de l'appartenance à une famille de tarifs comportent, pour chaque famille de tarifs, un jeu d'attributs qu'un tarif doit présenter pour appartenir à ladite famille de tarifs.

17. Procédé selon l'une quelconque des revendications 7 à 16 **caractérisé par le fait**
**qu'**on accède en temps réel aux données de la base de données.

18. Procédé selon l'une quelconque des revendications 7 à 17 **caractérisé par le fait que**
les produits de voyage sont des vols de transports aériens inclus dans un marché domestique ou international.
